# EUROPÄISCHE PATENTSCHRIFT

(11) **EP 3 744 577 B1**
(45) Veröffentlichungstag und Bekanntmachung des Hinweises auf die Patenterteilung: **15.12.2021**
(21) Anmeldenummer: 20166372.1
(22) Anmeldetag: 27.03.2020
(51) Int. Cl.: B60R 21/203, B60R 21/015, B62D 1/18

(54) **VORRICHTUNG ZUR ÜBERWACHUNG EINER LENKRADSTELLUNG EINES KRAFTFAHRZEUGS**
DEVICE FOR MONITORING A STEERING WHEEL POSITION OF A MOTOR VEHICLE
DISPOSITIF DE SURVEILLANCE DE LA POSITION DU VOLANT D'UN VÉHICULE AUTOMOBILE

(30) Priorität: 25.05.2019 DE 102019003711
(43) Veröffentlichungstag der Anmeldung: 02.12.2020
(60) Teilanmeldung: 21201636.4
(73) Patentinhaber: MAN Truck & Bus SE, 80995 München (DE)
(72) Erfinder: Gerritzen, Ralph, 80995 München (DE); Mendler, Hardy, 80995 München (DE)
(74) Vertreter: v. Bezold & Partner Patentanwälte - PartG mbB

(56) Entgegenhaltungen:
- JP-A- H1 095 350
- JP-A- 2002 255 042
- US-A1- 2005 140 127

## Beschreibung

Die Erfindung betrifft eine Vorrichtung zur Überwachung einer Lenkradstellung eines Kraftfahrzeugs, vorzugsweise eines Nutzfahrzeugs.

Bekanntermaßen besitzen heute übliche Kraftfahrzeuge, insbesondere Personenkraftwagen (PKW), eine im Wesentlichen ortsfeste Lenksäule, an deren dem Fahrzeug-Innenraum zugewandten freien Ende ein Lenkrad angeordnet ist. Um dieses relativ zum Fahrer möglichst günstig positionieren zu können, kann die Neigung der Lenksäule ggf. in geringem Maße verändert werden. Ferner kann die innerhalb der Lenksäule geführte Lenkspindel in gewissem Umfang teleskopisch ausgeführt sein. Beim Verschwenken des Lenkrads wird dabei das quasi eine Ebene beschreibende Lenkrad um eine in dieser Ebene oder parallel zu dieser liegende Achse gedreht.

Im Gegensatz zum PKW ist es im Nutzfahrzeug oftmals möglich, das Lenkrad in einem vergleichsweise großen Bereich zu verstellen bzw. zu verschwenken. Es ist beispielsweise aus der Praxis bekannt, das Lenkrad von einer relativ senkrechten Stellung dem Fahrer zugewandt, wie es im PKW üblich ist, in eine fast horizontale Lage vom Fahrer weg zu bringen. Diese horizontale Lenkrad-Lage erleichtert das Ein- und Aussteigen oder dient als geeignete Schreibunterlage. In allen Lenkradpositionen kann ein Fahrbetrieb möglich sein.

Im Fahrbetrieb bietet jedoch die senkrechte Lage des Lenkrads bzw. Airbags den für den Airbagfall optimalen Personenschutz. Die horizontale Lage des Lenkrads ist für Pausen bzw. für den Stillstand des Kraftfahrzeugs gedacht, jedoch nicht für den Fall der Airbag-Auslösung optimal. Die Schutzwirkung beim Auslösen des Airbags ist in dieser Pausenlage nicht gegeben. Der Fahrer wird in diesem Fall nicht in den Sitz gedrückt, sondern kann von dem ausgelösten Airbag einen "Kinnhaken" bekommen. In diesem Fall können sogar schwere oder gar tödliche Verletzungen auftreten.

Das Dokument US 2005/140127 A1 offenbart ein System umfassend ein Insassenerfassungsmodul, ein Inflatorsteuermodul und ein Lenkradsteuermodul. Ein Insassencharakteristik-Erfassungsmodul ist ausgebildet, Eigenschaften eines Insassen in einem Sitz zu bestimmen, der einem Lenkrad zugewandt ist. Ein Inflator-Steuermodul ist angepasst, den Gasstrom des Inflators basierend auf den Insasseneigenschaften an einen Airbag im Lenkrad anzupassen.

Das Lenkradsteuermodul ist ausgebildet, um das Lenkrad basierend auf den Insasseneigenschaften und dem Gasdurchsatz des Inflators zu positionieren. Durch diese Offenbarung ist eine Vorrichtung gemäß dem Oberbegriff vom Anspruch 1 bekannt.

Das Dokument JP 2002 255042 A beschreibt ein Säulenantriebsmittel zum Vorwärts- und Rückwärtsbewegen der Lenksäule in Bezug auf den Fahrer, Intervalldetektionsmittel zum Detektieren eines Intervalls zwischen dem Fahrer und dem Lenkrad und eines Intervalls zwischen dem Fahrer und dem Lenkrad basierend auf dem Detektionsergebnis der Intervalldetektionsmittel.

Das Dokument JP H10 95350 A offenbart ein Lenkrad, das ausgebildet ist, einen Neigungswinkel von einem normalen Gebrauchszustand nach oben zu verändern; ein Lenkrad, das auf einer unteren Oberflächenseite einer Lenksäule angeordnet ist; und ein Airbag, der zwischen den Airbags angeordnet ist und den Neigungswinkel des Lenkrads durch die Aufblas- und Entfaltungskraft des Sackkörpers nach oben verändert.

Es ist daher eine Aufgabe der Erfindung, einen verbesserten Ansatz bereitzustellen, mit dem die vorstehend beschriebenen Probleme und Nachteile vermieden werden können. Die Aufgabe der Erfindung ist es insbesondere, eine Technik bereitzustellen, mit der auch bei verschwenkbaren Lenkrädern, die einen integrierten Airbag aufweisen, Gefahrensituationen vermieden oder zumindest reduziert werden können, in denen aufgrund einer ungünstigen Verschwenkstellung des Lenkrads kein zuverlässiger Fahrerschutz durch den ausgelösten Airbag möglich ist.

Diese Aufgabe wird durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Vorrichtung zur Überwachung einer Lenkradstellung eines Kraftfahrzeugs, vorzugsweise eines Nutzfahrzeugs, bereitgestellt. Die Vorrichtung umfasst in an sich bekannter Weise ein Lenkrad mit integriertem Airbag, das zwischen einer ersten Stellung und einer zweiten Stellung verschwenkbar oder, anders ausgedrückt, verkippbar ist, wobei das Lenkrad in der ersten Stellung eine im Vergleich zur zweiten Stellung horizontalere Ausrichtung aufweist. Die Vorrichtung ist vorzugsweise um eine zu einer Lenksäule des Lenkrads senkrechte Achse verschwenkbar.

Anders ausgedrückt kann das Lenkrad im Wesentlichen um eine in Kraftfahrzeug-Querrichtung verlaufende und/oder horizontale Achse zwischen der ersten Stellung und der zweiten Stellung verschwenkbar, d. h. verkippbar, ausgeführt sein. Beim Verschwenken des Lenkrads kann dabei das quasi eine Ebene beschreibende Lenkrad, beispielsweise der Lenkradkranz, um eine in dieser Ebene oder parallel zu dieser liegende Achse gedreht werden.

Unter der in der ersten Stellung im Vergleich zur zweiten Stellung horizontaleren Ausrichtung des Lenkrads wird verstanden, dass ein Winkel, den das Lenkrad mit einer Horizontalebene bildet, in der ersten Stellung kleiner ist als in der zweiten Stellung. Anders ausgedrückt weist das Lenkrad in der zweiten Stellung eine vertikalere Ausrichtung als in der ersten Stellung auf und/oder weist das Lenkrad zu einem in normaler Fahrposition befindlichen Fahrer in der zweiten Stellung eine parallelere Ausrichtung zum Fahrer als in der ersten Stellung auf.

Die erste Stellung kann vorzugsweise eine horizontale oder nahezu horizontale Ausrichtung des Lenkrads umfassen. Das Lenkrad kann in der ersten Stellung eine Ausrichtung aufweisen, in der das Lenkrad mit einer Horizontalebene einen Winkel von kleiner 30 Grad, weiter vorzugsweise kleiner 20 Grad, aufweist. Hierbei können ein Fahrbetrieb und/oder ein Lenken des Kraftfahrzeugs sowohl in der ersten als auch in der zweiten Stellung und/oder im Bereich zwischen der ersten und zweiten Stellung möglich sein.

Vorstehend wurde bereits festgestellt, dass ein Lenkrad, das sich in der ersten Stellung befindet, keinen optimalen Schutz für den Fahrer für den Fall der Airbag-Auslösung bietet oder sogar für den Fahrer gefährlich sein kann.

Gemäß einem allgemeinen Gesichtspunkt der Erfindung werden die genannten Aufgaben dadurch gelöst, dass die Vorrichtung zur Überwachung einer Lenkradstellung eines Kraftfahrzeugs ferner eine Sensoreinrichtung umfasst, die ausgebildet ist, eine Verschwenkstellung des Lenkrads zu bestimmen, und eine Überwachungseinrichtung umfasst, die ausgebildet ist, zu bestimmen, ob die bestimmte Verschwenkstellung des Lenkrads in einem vorbestimmten Verschwenkbereich liegt, und einen Hinweis auszugeben, falls die bestimmte Verschwenkstellung nicht in dem vorbestimmten Verschwenkbereich liegt. Der vorbestimmte Bereich ist dabei vorzugsweise so festgelegt, dass eine sichere Airbag-Auslösung ermöglicht wird, falls die Lenkradstellung in dem vorbestimmten Bereich liegt.

Mit anderen Worten wird somit eine geeignete Sensorik bereitgestellt, die die Lenkradstellung überwacht und/oder erfassen kann und dem Fahrer mitteilt, z. B. über eine Textmeldung, die durch eine Anzeigevorrichtung anzeigbar ist, ob sich das Lenkrad im Hinblick auf die Airbag-Auslösung in einer geeigneten Stellung befindet, und/oder den Fahrer warnt, falls sich das Lenkrad im Hinblick auf die Airbag-Auslösung nicht in einer geeigneten Stellung befindet.

Auf diese Weise kann somit dem Fahrer ein sicherheitskritischer Hinweis gegeben werden, falls sich das Lenkrad im Hinblick auf die Airbag-Auslösung nicht in einer geeigneten Stellung befindet, so dass der Fahrer nicht unbewusst oder ohne es zu merken einen Fahrbetrieb mit einer Lenkradstellung ausführt, in der der Fahrer nicht optimal geschützt ist.

Das Lenkrad kann zwischen der ersten Stellung und der zweiten Stellung kontinuierlich verschwenkbar ausgeführt sein. Alternativ kann das Lenkrad zwischen der ersten Stellung und der zweiten Stellung auf mindestens eine, vorzugsweise mehrere diskrete Zwischenpositionen verstellbar sein.

Gemäß einer Ausführungsform kann der vorbestimmte Bereich nur Verschwenkstellungen des Lenkrads umfassen, in denen durch den ausgelösten Airbag eine Kraft auf den Fahrer ausgeübt wird, deren horizontal gerichtete Kraftkomponente größer als deren vertikal gerichtete Kraftkomponente ist. Alternativ oder zusätzlich kann der vorbestimmte Bereich nur Verschwenkstellungen des Lenkrads umfassen, in denen durch den ausgelösten Airbag eine Kraft auf den Fahrer ausgeübt wird, die den Fahrer in Richtung des Sitzes drückt und/oder in denen eine für einen Fahrer des Kraftfahrzeugs sichere Airbag-Auslösung möglich ist. Der vorbestimmte Bereich umfasst hierbei zumindest nicht die erste Stellung.

Gemäß einer Ausführungsform kann der von der Überwachungseinrichtung ausgegebene Hinweis angeben, ob die bestimmte Verschwenkstellung in dem vorbestimmten Verschwenkbereich liegt oder nicht in dem vorbestimmten Verschwenkbereich liegt. Mit anderen Worten kann der von der Überwachungseinrichtung ausgegebene Hinweis so ausgebildet sein, dass der Fahrer hieraus ableiten kann, ob sich das Lenkrad in Bezug auf eine sichere Airbag-Auslösung in einer geeigneten Verschwenkstellung befindet oder nicht. Entsprechend wird der Fahrer durch den Hinweis darüber informiert, ob die aktuelle Lenkradstellung eine sichere Airbag-Auslösung ermöglicht oder nicht.

Beispielsweise kann der von der Überwachungseinrichtung ausgegebene Hinweis eine Textmeldung umfassen, die auf einer Anzeigefläche des Kraftfahrzeugs angezeigt wird. Die Anzeigefläche kann beispielsweise eine Anzeigefläche eines Kombiinstruments einer multifunktionalen digitalen Anzeige- oder Instrumententafel des Kraftfahrzeugs sein, z. B. ein Display, LCD- oder TFT-Bildschirm. Ein derartiger Hinweis ist für den Fahrer einfach zu verstehen.

Alternativ oder zusätzlich kann der von der Überwachungseinrichtung ausgegebene Hinweis durch Verwendung einer Warnleuchte ausgegeben werden, die so ausgeführt ist, dass sie leuchtet, falls die bestimmte Verschwenkstellung nicht in dem vorbestimmten Verschwenkbereich liegt, und die erlischt, falls die bestimmte Verschwenkstellung in dem vorbestimmten Verschwenkbereich liegt. Die Verwendung einer eigenen Warnleuchte kann eine besonders gute Signalwirkung erzeugen. Der Hinweis kann alternativ oder zusätzlich auch eine akustische Meldung oder einen akustischen Signalton umfassen, um die Signalwirkung weiter zu erhöhen.

Ferner kann die Sensoreinrichtung ausgebildet sein, die Verschwenkstellung des Lenkrads im gesamten Bereich zwischen der ersten und zweiten Stellung zu bestimmen. Auf diese Weise kann für jede mögliche Verschwenkstellung des Lenkrads bestimmt werden, ob hierfür eine sichere Airbag-Auslösung möglich ist.

Erfindungsgemäß ist die Überwachungseinrichtung ausgebildet, den Hinweis, dass die bestimmte Verschwenkstellung nicht in dem vorbestimmten Verschwenkbereich liegt, nur bei Vorliegen einer vorbestimmten Betriebssituation auszugeben, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst. Dies bietet den Vorzug, dass der Fahrer bei Pausen bzw. im Nicht-Fahrbetrieb nicht unnötig auf die im Hinblick auf die Airbag-Auslösung unsichere Lenkradstellung hingewiesen wird.

Gemäß einer besonders bevorzugten Ausführungsform kann die Vorrichtung zur Überwachung einer Lenkradstellung eines Kraftfahrzeugs ferner eine Lenkradverstelleinrichtung umfassen, die zur beispielsweise elektromotorischen Einstellung der Lenkradstellung zwischen der ersten Stellung und der zweiten Stellung ausgebildet ist. Dies bietet den Vorzug, dass die Lenkradstellung einfach und schnell angepasst werden kann. Die Lenkradverstelleinrichtung kann vorzugsweise eine Bedieneinrichtung umfassen, um die motorische Einstellung der Lenkradstellung manuell zu steuern. Die Bedieneinrichtung kann lediglich beispielhaft einen Schalter oder Taster zur Steuerung der Lenkradstellung umfassen. Der Schalter oder Taster kann auch als sog. Soft-Key, d. h. als virtueller oder digitaler Schalter ausgeführt sein, der auf einer digitalen Anzeige anzeigbar und betätigbar oder auswählbar ist.

Gemäß einer weiteren Variante kann die Überwachungseinrichtung ausgebildet sein, während der manuellen Einstellung der Lenkradstellung durch eine Bedienperson (z. B. Fahrer), z. B durch Betätigung der Lenkradverstelleinrichtung, den Hinweis auszugeben, ob die Verschwenkstellung des Lenkrads in dem vorbestimmten Verschwenkbereich liegt oder nicht. Auf diese Weise erhält die Bedienperson bei der Verstellung des Lenkrads unmittelbar eine Rückmeldung, ob die Lenkradstellung in dem für die Airbag-Auslösung sicheren Bereich liegt oder nicht, und kann auf diese Weise bediensicher die gewünschte Lenkradstellung einstellen.

Gemäß einer weiteren bevorzugten Ausführungsform kann die Vorrichtung zur Überwachung einer Lenkradstellung eines Kraftfahrzeugs ferner eine Fahrererfassungseinrichtung umfassen, die ausgebildet ist, eine Fahrerstatur und/oder Fahrersitzposition zu bestimmen. Die Fahrererfassungseinrichtung kann dabei beispielsweise als Kamera oder optischer Sensor ausgebildet sein. Die Fahrerstatur kann beispielsweise die Sitzhöhe und/oder die Kopfhöhe des Fahrers umfassen.

Eine vorteilhafte Variante dieser Ausführungsform sieht vor, dass der vorbestimmte Verschwenkbereich in Abhängigkeit von der bestimmten Fahrerstatur und/oder Fahrersitzposition festgelegt wird. Die für eine sichere Lenkrad-Airbag-Auslösung optimale Verschwenkstellung des Lenkrads kann auch von der Größe des Fahrers abhängen. Entsprechend bietet diese Variante den besonderen Vorzug, dass der vorbestimmte Verschwenkbereich und damit die optimale Verschwenkstellung des Lenkrads an die aktuelle Fahrerstatur und/oder Fahrersitzposition angepasst werden kann.

Ferner besteht die Möglichkeit, dass die Lenkradstellung automatisch mittels der Lenkradverstelleinrichtung und in Abhängigkeit von der bestimmten Fahrerstatur und/oder Fahrersitzposition auf eine Verschwenkstellung in dem vorbestimmten Verschwenkbereich eingestellt werden kann. Die automatische Einstellung der Lenkradverstellung kann z. B. erfolgen, wenn die Verstellung durch Betätigung des Bedienelements aktiviert wird.

Alternativ oder zusätzlich kann die automatische Einstellung der Lenkradstellung nur bei Vorliegen einer vorbestimmten Betriebssituation durchgeführt werden, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst.

Die Erfindung betrifft ferner ein Kraftfahrzeug umfassend eine Vorrichtung zur Überwachung einer Lenkradstellung eines Kraftfahrzeugs wie in diesem Dokument beschrieben. Das Kraftfahrzeug kann ein Nutzfahrzeug sein, beispielsweise ein Lastkraftwagen oder Omnibus.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung der Vorrichtung gemäß einer Ausführungsform der Erfindung; und
- Figur 2: eine stark schematisierte Darstellung verschiedener Lenkradstellungen der Vorrichtung.

Gleiche oder äquivalente Elemente sind in allen Figuren mit denselben Bezugszeichen bezeichnet und zum Teil nicht gesondert beschrieben.

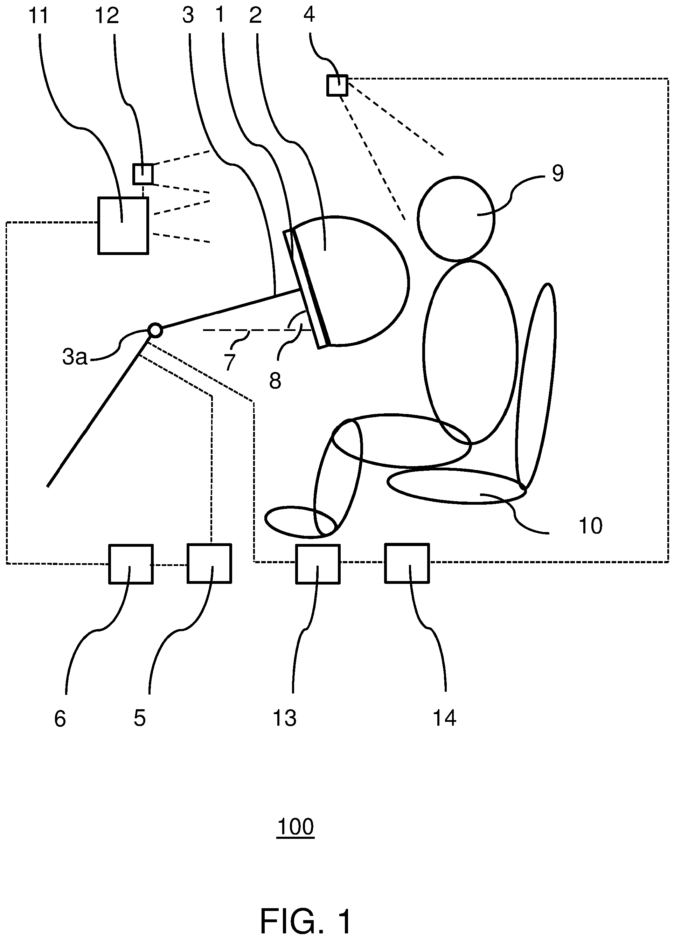

Figur 1 zeigt eine schematische Darstellung der Vorrichtung 100 zur Überwachung einer Lenkradstellung eines Kraftfahrzeugs gemäß einer Ausführungsform der Erfindung.

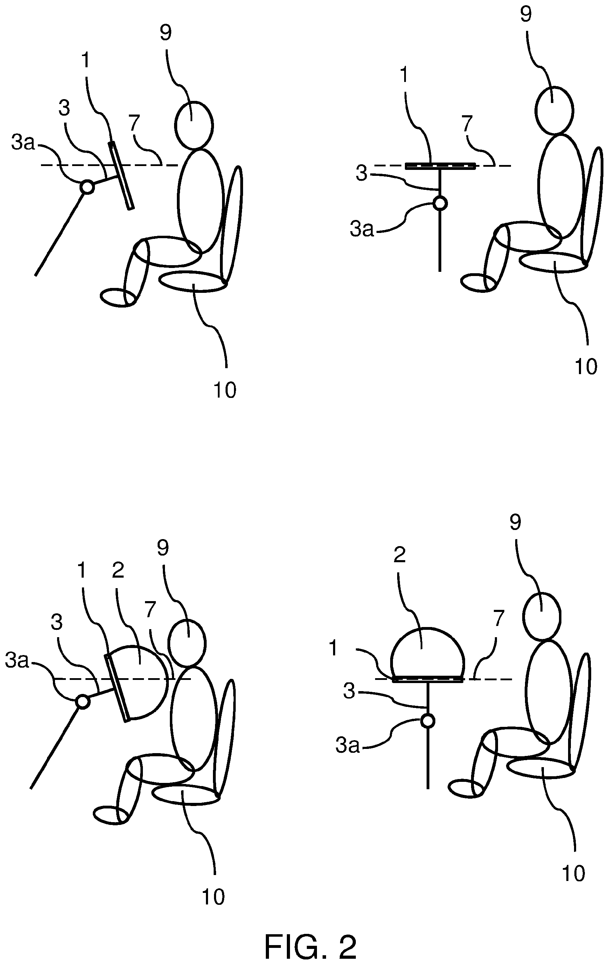

Die Vorrichtung 100 umfasst ein Lenkrad 1 mit integriertem Airbag 2, das an einer Lenksäule 3 befestigt ist. In Fig. 1 ist der Airbag 2 im ausgelösten Zustand gezeigt. An der Lenksäule 3 befindet sich ein, z. B. als Kardangelenk oder Kreuzgelenk ausgeführtes, Gelenk 3a. Das Lenkrad 1 ist gegenüber einer (nicht dargestellten) horizontalen Achse zwischen einer ersten Stellung oder einer zweiten Stellung verschwenkbar, welche nachfolgend, teilweise unter Bezugnahme auf Fig. 2, beschrieben werden. In der Darstellung der Fig. 1 befindet sich das Lenkrad in der ersten Verschwenkstellung.

Fig. 2 dient dabei lediglich der Verdeutlichung der genannten ersten und zweiten Stellung des Lenkrads 1.

In der ersten Stellung des Lenkrads 1 kann das Lenkrad beispielsweise in eine Horizontalstellung verschwenkt sein, wie in Figur 2 oben recht dargestellt. Diese Lenkradstellung erleichtert im nicht-ausgelösten Zustand des Airbags 2 dem Fahrer 9 das Ein- und Aussteigen oder kann als Schreibunterlage dienen und ist insofern vorzugsweise für Pausen bzw. für den Stillstand des Kraftfahrzeugs gedacht ist (siehe Fig. 2 oben rechts). Grundsätzlich ist im gezeigten Ausführungsbeispiel ein Fahrbetrieb allerdings sowohl in der ersten Stellung als auch in der nachfolgend beschriebenen zweiten Stellung des Lenkrads 1 möglich. Löst der Airbag 2 im gezeigten Ausführungsbeispiel in der ersten Stellung des Lenkrads 1 aus (siehe Fig. 2 unten rechts), wird auf den Fahrer 9 durch den ausgelösten Airbag 2 eine Kraft ausgeübt, deren vertikal gerichtete Kraftkomponente größer ist als deren horizontal gerichtete Kraftkomponente. Der Fahrer 9 kann einen "Kinnhaken" durch den Airbag 2 und Verletzungen erleiden. Bezüglich einer Aufnahme kinetischer Energie des Fahrers durch den Airbag 2 ist die erste Stellung gegenüber der unten beschriebenen zweiten Stellung nachteilhaft.

Von der ersten Stellung kann das Lenkrad 1 durch Verschwenken bis in eine zweite Stellung verschwenkt werden. Das Verschwenken des Lenkrads 1 findet dabei um das Gelenk 3a der Lenksäule 3 statt. In anderen Worten kann das Lenkrad 1 im Gelenk 3a der Lenksäule 3 um eine Achse verschwenkt werden, die normal zur Zeichenebene der Fig. 1 und Fig. 2 steht.

In der zweiten Stellung des Lenkrads 1 schließt das Lenkrad 1 mit der Horizontalebene 7 einen Winkel 8 von größer 30, beispielsweise größer 60 Grad ein. Das Lenkrad 1 weist in der Folge eine relativ senkrechte, dem Fahrer 9 zugewandte Stellung auf. Fig. 2 (oben links) zeigt die zweite Stellung des Lenkrads 1 im nicht-ausgelösten Zustand des Airbags 2. Im ausgelösten Zustand des Airbags 2 (siehe Fig. 2 unten links) wird im gezeigten Ausführungsbeispiel in der zweiten Stellung des Lenkrads 1 zudem erreicht, dass durch den ausgelösten Airbag 2 eine Kraft auf den Fahrer 9 ausgeübt wird, deren horizontal gerichtete Kraftkomponente größer als deren vertikal gerichtete Kraftkomponente ist. Die horizontale Kraftkomponente drückt den Fahrer 9 in Richtung des Sitzes 10. Bezüglich einer Aufnahme kinetischer Energie des Fahrers 9 durch den Airbag 2 ist die zweite Stellung insofern optimal. Im Fahrbetrieb bietet die zweite Stellung insofern optimalen Personenschutz.

Wie in Fig. 1 schematisch dargestellt, umfasst die Vorrichtung 100 ferner eine, z. B. als potentiometrischen Winkelsensor ausgeführte Sensoreinrichtung 5, die ausgebildet ist, die Verschwenkstellung des Lenkrads 1 zu bestimmen. Die erfasste Verschwenkstellung des Lenkrads 1 wird an eine Überwachungseinrichtung 6 übermittelt. Die Überwachungseinrichtung 6 ist z. B als in den CAN-Bus des Kraftfahrzeugs integriertes multifunktionales Steuergerät ausgeführt und ausgebildet, zu bestimmen, ob diese Verschwenkstellung in einem vorbestimmten Verschwenkbereich liegt. Der vorbestimmte Verschwenkbereich ist so festgelegt, dass dieser zumindest die zweite Lenkradstellung umfasst und die erste Lenkradstellung nicht umfasst und beispielsweise weitere Lenkradverschwenkstellungen umfasst, in denen das Lenkrad eine für die Airbag-Auslösung sichere Verschwenkstellung aufweist, beispielsweise wenn das Lenkrad 1 mit der Horizontalebene 7 einen Winkel 8 von größer 45 Grad einschließt.

Falls die durch die Sensoreinrichtung 5 bestimmte Verschwenkstellung nicht in einem vorbestimmten Verschwenkbereich liegt, ist die Überwachungseinrichtung 6 ausgebildet, einen Hinweis auszugeben. In diesem Fall sendet die Überwachungseinrichtung 6 in der gezeigten Ausführungsform einen Hinweis, z. B. in Form eines über eine elektrische Leitung übertragenen elektrischen Signals, an die z. B. als LCD oder TFT-Bildschirm ausgeführte Anzeigefläche 11, die sich in der Instrumententafel des Kraftfahrzeugs befindet. Auf der Anzeigefläche 11 löst das elektrische Signal eine an den Fahrer 9 gerichtete Textmeldung in Form eines Warnhinweises aus, aus dem der Fahrer 9 ableiten kann, dass sich das Lenkrad 1 nicht in einer für eine sichere Airbag-Auslösung geeigneten Verschwenkstellung befindet. Zusätzlich kann der Hinweis im gezeigten Ausführungsbeispiel optional in Form einer aufleuchtenden Wamleuchte 12 und/oder in Form eines akustischen Signaltons an den Fahrer 9 ausgegeben werden.

Befindet sich das Lenkrad 1 demgegenüber im gezeigten Ausführungsbeispiel in der zweiten Stellung, gezeigt in Figur 2 oben links, so erhält der Fahrer 9 eine andere Textmeldung, aus der der Fahrer 9 ableiten kann, dass sich das Lenkrad 9 in einer für eine sichere Airbag-Auslösung geeigneten Stellung befindet.

Die Vorrichtung 100 umfasst in der gezeigten Ausführungsform ferner eine Lenkradverstelleinrichtung 13. Diese ist über entsprechende Aktuatoren, beispielsweise über einen Spindelantrieb, zur elektromotorischen Einstellung der Lenkradstellung zwischen der ersten Stellung und der zweiten Stellung des Lenkrads 1 ausgebildet. Die Lenkradverstelleinrichtung 13 umfasst eine, beispielsweise als Schalter ausgebildete, Bedieneinrichtung 14, über deren Betätigung der Fahrer 9 die motorische Einstellung der Lenkradstellung manuell steuern bzw. auslösen kann. Betätigt der Fahrer 9 die Bedieneinrichtung 14 manuell, z. B durch Drücken des Schalters, verfährt die Lenkradverstelleinrichtung 13 im gezeigten Ausführungsbeispiel das Lenkrad 1 in Abhängigkeit von der jeweils aktuell vorliegenden Lenkradstellung von der ersten Stellung in die zweite Stellung oder von der zweiten Stellung in die erste Stellung. Ferner sind auch Zwischenstellungen zwischen der ersten und zweiten Stellung einstellbar.

Die Vorrichtung 100 kann ferner optional eine Fahrererfassungseinrichtung 4 umfassen, die die Fahrerstatur des Fahrers 9 und/oder die Fahrersitzposition auf dem Fahrersitz 10 bestimmt. Die Fahrererfassungseinrichtung 4 kann z. B. als Kamera, Infrarot- oder CCD-Sensor ausgeführt sein. Die Fahrererfassungseinrichtung 4 erfasst im gezeigten Ausführungsbeispiel die Fahrerstatur des Fahrers, beispielsweise dessen Kopfposition oder durch Bestimmung der Scheitel-Steiß-Länge.

In der Überwachungseinrichtung 6 können zuvor unterschiedliche vorbestimmte Verschwenkbereiche hinterlegt sein, die jeweils unterschiedlichen Fahrerstaturen bzw. -größen und/oder Fahrersitzpositionen zugeordnet sind. Hierbei kann beispielsweise vorab mittels Crashtest-Dummys experimentell bestimmt werden, welche Lenkradstellungen für welche Fahrerstaturen bzw. -größen noch eine sichere Airbag-Auslösung ermöglichen, d. h. z. B. eine möglichst hohe Absorbtionswirkung des Airbags 2 und entsprechend unterschiedliche vorbestimmte Verschwenkbereiche festgelegt werden, die jeweils unterschiedlichen Fahrerstaturen bzw. -größen und/oder Fahrersitzpositionen zugeordnet sind.

In Abhängigkeit von den erfassten Daten (erfasste Fahrerstatur und/oder Fahrersitzposition auf dem Fahrersitz 10) wird dann der hierfür in der Überwachungseinrichtung 6 hinterlegte vorbestimmte Verschwenkbereich ermittelt und geprüft, ob die aktuelle Lenkradstellung innerhalb dieses vorbestimmten Verschwenkbereichs liegt oder nicht.

Ist dies nicht der Fall, kann in einer nicht beanspruchten Ausführungsform anstatt des Ausgebens eines Warnhinweises und einer manuellen durch den Fahrer ausgelösten Lenkradverstellung mittels der Lenkradverstelleinrichtung 13 auch eine automatische elektromotorische Verstellung mittels der Lenkradverstelleinrichtung 13 erfolgen, um ohne Zutun des Fahrers eine Lenkradverschwenkstellung einzustellen, die innerhalb des vorbestimmten sicheren Bereichs liegt.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Lenkrad
- 2: Airbag
- 3: Lenksäule
- 4: Fahrererfassungseinrichtung
- 5: Sensoreinrichtung
- 6: Überwachungseinrichtung
- 7: Horizontalebene
- 8: Winkel
- 9: Fahrer
- 10: Sitz
- 11: Anzeigefläche
- 12: Warnleuchte
- 13: Lenkradverstelleinrichtung
- 14: Bedieneinrichtung
- 100: Vorrichtung

## Patentansprüche

1. Vorrichtung (100) zur Überwachung einer Lenkradstellung eines Kraftfahrzeugs, vorzugsweise Nutzfahrzeugs, umfassend
ein Lenkrad (1) mit integriertem Airbag (2), das um eine zu einer Lenksäule (3) des Lenkrads (1) senkrechte Achse zwischen einer ersten Stellung und einer zweiten Stellung verschwenkbar ist, wobei das Lenkrad (1) in der ersten Stellung eine im Vergleich zur zweiten Stellung horizontalere Ausrichtung aufweist;
eine Sensoreinrichtung (5), die ausgebildet ist, eine Verschwenkstellung des Lenkrads (1) zu bestimmen, und
eine Überwachungseinrichtung (6), die ausgebildet ist, zu bestimmen, ob die bestimmte Verschwenkstellung des Lenkrads (1) in einem vorbestimmten Verschwenkbereich liegt,
**dadurch gekennzeichnet,**
**dass** die Überwachungseinrichtung (6) ausgebildet ist, einen Hinweis auszugeben, falls die bestimmte Verschwenkstellung nicht in dem vorbestimmten Verschwenkbereich liegt, wobei die Überwachungseinrichtung (6) ausgebildet ist, den Hinweis nur bei Vorliegen einer vorbestimmten Betriebssituation auszugeben, wobei die vorbestimmten Betriebssituation einen Fahrbetrieb, eine Aufnahme des Fahrbetriebs und/oder ein Überschreiten einer Mindestfahrgeschwindigkeit des Kraftfahrzeugs umfasst.

2. Vorrichtung (100) nach Anspruch 1, **dadurch gekennzeichnet, dass** das Lenkrad (1) in der ersten Stellung eine horizontale Ausrichtung aufweist oder eine Ausrichtung aufweist, in der das Lenkrad (1) mit einer Horizontalebene (7) einen Winkel (8) von kleiner 30 Grad, vorzugsweise kleiner 20 Grad, aufweist.

3. Vorrichtung (100) nach Anspruch 1 oder 2, **dadurch gekennzeichnet, dass** der vorbestimmte Bereich
a) nur Verschwenkstellungen umfasst, in denen durch den ausgelösten Airbag (2) eine Kraft auf den Fahrer (9) ausgeübt wird, deren horizontal gerichtete Kraftkomponente größer als deren vertikal gerichtete Kraftkomponente ist und/oder die den Fahrer (9) in Richtung des Sitzes (10) drückt und/oder in denen einen für einen Fahrer (9) des Kraftfahrzeugs sichere Airbag-Auslösung möglich ist; und/oder
b) nicht die erste Stellung umfasst.

4. Vorrichtung (100) nach einem der vorhergehenden Ansprüche, **dadurch gekennzeichnet, dass** der von der Überwachungseinrichtung (6) ausgegebene Hinweis
a) angibt, ob die bestimmte Verschwenkstellung in dem vorbestimmten Verschwenkbereich liegt oder nicht in dem vorbestimmten Verschwenkbereich liegt; und/oder
b) eine Textmeldung umfasst, die auf einer Anzeigefläche (11) des Kraftfahrzeugs, vorzugsweise auf einer Anzeigefläche (11) eines Kombiinstruments einer multifunktionalen digitale Anzeige- oder Instrumententafel des Kraftfahrzeugs, angezeigt wird und aus der ein Fahrer (9) ableiten kann, ob sich das Lenkrad (1) in Bezug auf eine sichere Airbag-Auslösung in einer geeigneten Verschwenkstellung befindet.

5. Vorrichtung (100) nach einem der vorhergehenden Ansprüche, **dadurch gekennzeichnet, dass** der von der Überwachungseinrichtung (6) ausgegebene Hinweis durch Verwendung einer Warnleuchte (12) ausgegeben wird, die leuchtet, falls die bestimmte Verschwenkstellung nicht in dem vorbestimmten Verschwenkbereich liegt, und die erlischt, falls die bestimmte Verschwenkstellung in dem vorbestimmten Verschwenkbereich liegt.

6. Vorrichtung (100) nach einem der vorhergehenden Ansprüche, **gekennzeichnet durch** eine Lenkradverstelleinrichtung (13) zur motorischen Einstellung der Lenkradstellung zwischen der ersten Stellung und der zweiten Stellung, umfassend eine Bedieneinrichtung (14), um die motorische Einstellung der Lenkradstellung manuell zu steuern.

7. Vorrichtung (100) nach Anspruch 6, **dadurch gekennzeichnet, dass** die Überwachungseinrichtung (6) ausgebildet ist, während der manuellen Einstellung der Lenkradstellung einem Fahrer (9) den Hinweis auszugeben, ob die Verschwenkstellung des Lenkrads (1) in dem vorbestimmten Verschwenkbereich liegt oder nicht.

8. Vorrichtung (100) nach einem der vorhergehenden Ansprüche, **gekennzeichnet durch** eine Fahrererfassungseinrichtung (4), die ausgebildet ist, eine Fahrerstatur und/oder Fahrersitzposition zu bestimmen.

9. Vorrichtung (100) nach Anspruch 8, **dadurch gekennzeichnet, dass** der vorbestimmte Verschwenkbereich in Abhängigkeit von der bestimmten Fahrerstatur und/oder Fahrersitzposition festgelegt wird.

10. Vorrichtung (100) nach Anspruch 8 oder 9, und Anspruch 6, **dadurch gekennzeichnet, dass** die Lenkradstellung automatisch mittels der Lenkradverstelleinrichtung (13) und in Abhängigkeit von der bestimmten Fahrerstatur und/oder Fahrersitzposition auf eine Verschwenkstellung in dem vorbestimmten Verschwenkbereich eingestellt wird.

11. Vorrichtung (100) nach Anspruch 10, **dadurch gekennzeichnet, dass** die Vorrichtung (100) ausgebildet ist, die automatische Einstellung der Lenkradstellung nur bei Vorliegen einer vorbestimmten Betriebssituation durchzuführen, wobei die vorbestimmte Betriebssituation einen Fahrbetrieb, eine Aufnahme des Fahrbetriebs und/oder ein Überschreiten einer Mindestfahrgeschwindigkeit des Kraftfahrzeugs umfasst.

12. Vorrichtung (100) nach einem der vorhergehenden Ansprüche, **dadurch gekennzeichnet, dass** das Lenkrad (1) zwischen der ersten Stellung und der zweiten Stellung kontinuierlich verschwenkbar oder auf mehrere diskrete Zwischenpositionen verstellbar ist.

13. Vorrichtung (100) nach einem der vorhergehenden Ansprüche, **dadurch gekennzeichnet, dass** die Sensoreinrichtung (5) ausgebildet ist, die Verschwenkstellung des Lenkrads (1) im gesamten Bereich zwischen der ersten und zweiten Stellung zu bestimmen.

14. Kraftfahrzeug, vorzugsweise Nutzfahrzeug, wie beispielsweise ein Lastkraftwagen oder Omnibus, umfassend eine Vorrichtung (100) nach einem der vorhergehenden Ansprüche.

## Claims

1. An apparatus (100) for monitoring a steering wheel position of a motor vehicle, preferably of a utility vehicle, comprising
a steering wheel (1) with an integrated airbag (2), which steering wheel is pivotable about an axis perpendicular to a steering column (3) of the steering wheel (1) between a first position and a second position, wherein, in the first position, the steering wheel (1) has an orientation which is more horizontal in comparison to the second position;
a sensor device (5) which is designed to determine a pivoting position of the steering wheel (1), and
a monitoring device (6) which is designed to determine whether the determined pivoting position of the steering wheel (1) lies within a predetermined pivoting range,
**characterized**
**in that** the monitoring device (6) is designed to output an indication if the determined pivoting position does not lie within the predetermined pivoting range, wherein the monitoring device (6) is designed to output the indication only when a predetermined operating situation is present, wherein the predetermined operating situation comprises a driving mode, a commencement of the driving mode and/or an exceeding of a minimum driving speed of the motor vehicle.

2. The apparatus (100) according to Claim 1, **characterized in that**, in the first position, the steering wheel (1) has a horizontal orientation or has an orientation in which the steering wheel (1) is at an angle (8) of less than 30 degrees, preferably of less than 20 degrees, to a horizontal plane (7).

3. The apparatus (100) according to Claim 1 or 2, **characterized in that** the predetermined range a) comprises only pivoting positions in which the triggered airbag (2) exerts a force on the driver (9), the horizontally directed force component of which is greater than its vertically directed force component, and/or which force pushes the driver (9) in the direction of the seat (10), and/or in which pivoting positions a triggering of the airbag that is safe for a driver (9) of the motor vehicle is possible; and/or
b) does not comprise the first position.

4. The apparatus (100) according to one of the preceding claims, **characterized in that** the indication output by the monitoring device (6) (a) specifies whether the determined pivoting position lies within the predetermined pivoting range or does not lie within the predetermined pivoting range; and/or
b) comprises a text message which is displayed on a display surface (11) of the motor vehicle, preferably on a display surface (11) of an instrument cluster of a multifunctional digital display board or instrument panel of the motor vehicle and from which a driver (9) can deduce whether the steering wheel (1) is in a suitable pivoting position with regard to a safe triggering of the airbag.

5. The apparatus (100) according to one of the preceding claims, **characterized in that** the indication output by the monitoring device (6) is output through the use of a warning light (12) which illuminates if the determined pivoting position does not lie within the predetermined pivoting range and which goes out if the determined pivoting position lies within the predetermined pivoting range.

6. The apparatus (100) according to one of the preceding claims, **characterized by** a steering wheel adjustment device (13) for the motorized adjustment of the steering wheel position between the first position and the second position, comprising an operator control device (14) for manually controlling the motorized adjustment of the steering wheel position.

7. The apparatus (100) according to Claim 6, **characterized in that** the monitoring device (6) is configured to output, during the manual adjustment of the steering wheel position, the indication to a driver (9) as to whether the pivoting position of the steering wheel (1) lies or does not lie within the predetermined pivoting range.

8. The apparatus (100) according to one of the preceding claims, **characterized by** a driver-sensing device (4) which is designed to determine a driver's stature and/or driver's sitting position.

9. The apparatus (100) according to Claim 8, **characterized in that** the predetermined pivoting range is defined depending on the determined driver's stature and/or driver's sitting position.

10. The apparatus (100) according to Claim 8 or 9, and Claim 6, **characterized in that** the steering wheel position is adjusted to a pivoting position in the predetermined pivoting range automatically by means of the steering wheel adjustment device (13) and depending on the determined driver's stature and/or driver's sitting position.

11. The apparatus (100) according to Claim 10, **characterized in that** the apparatus (100) is designed to carry out the automatic adjustment of the steering wheel position only when a predetermined operating situation is present, wherein the predetermined operating situation comprises a driving mode, a commencement of the driving mode and/or an exceeding of a minimum driving speed of the motor vehicle.

12. The apparatus (100) according to one of the preceding claims, **characterized in that** the steering wheel (1) is continuously pivotable between the first position and the second position or is adjustable to a plurality of discrete intermediate positions.

13. The apparatus (100) according to one of the preceding claims, **characterized in that** the sensor device (5) is designed to determine the pivoting position of the steering wheel (1) throughout the range between the first and second position.

14. A motor vehicle, preferably a utility vehicle, such as, for example, a lorry or bus, comprising an apparatus (100) according to one of the preceding claims.

## Revendications

1. Dispositif (100) de surveillance d'une position du volant d'un véhicule automobile, de préférence d'un véhicule utilitaire, ledit dispositif comprenant
un volant (1) à airbag intégré (2) qui peut pivoter entre une première position et une deuxième position sur un axe perpendiculaire à une colonne de direction (3) du volant (1), le volant (1) ayant dans la première position une orientation plus horizontale que dans la deuxième position ;
un moyen formant capteur (5) qui est conçu pour déterminer une position de pivotement du volant (1), et
un moyen de surveillance (6) qui est conçu pour déterminer si la position de pivotement déterminée du volant (1) est située dans une plage de pivotement prédéterminée,
**caractérisé en ce que**
le moyen de surveillance (6) est conçu pour délivrer une information si la position de pivotement déterminée n'est pas dans la plage de pivotement prédéterminée, le moyen de surveillance (6) étant conçu pour délivrer l'information uniquement en présence d'une situation de fonctionnement prédéterminée, la situation de fonctionnement prédéterminée comprenant un mode de conduite, un engagement du mode de conduite et/ou un dépassement d'une vitesse de conduite minimale du véhicule automobile.

2. Dispositif (100) selon la revendication 1, **caractérisé en ce que** le volant (1) a dans la première position une orientation horizontale ou une orientation dans laquelle le volant (1) forme avec un plan horizontal (7) un angle (8) de moins de 30 degrés, de préférence de moins de 20 degrés.

3. Dispositif (100) selon la revendication 1 ou 2, **caractérisé en ce que** la plage prédéterminée a) ne comprend que des positions de pivotement dans lesquelles l'airbag déclenché (2) exerce une force sur le conducteur (9) dont la composante dirigée horizontalement est supérieure à sa composante dirigée verticalement et/ou qui pousse le conducteur (9) en direction du siège (10) et/ou dans lequel un déclenchement d'airbag sans danger pour un conducteur (9) du véhicule automobile est possible ; et/ou b) ne comprend pas la première position.

4. Dispositif (100) selon l'une des revendications précédentes, **caractérisé en ce que** l'information délivrée par le moyen de surveillance (6) a) indique si la position de pivotement déterminée est située dans la plage de pivotement prédéterminée ou n'est pas située dans la plage de pivotement prédéterminée ; et/ou
b) comprend un message textuel qui est affiché sur une surface d'affichage (11) du véhicule automobile, de préférence sur une surface d'affichage (11) d'un instrument combiné d'un tableau d'affichage ou tableau de bord numérique multifonctionnel du véhicule automobile, et à partir duquel un conducteur (9) peut déduire si le volant (1) est dans une position de pivotement appropriée par rapport à un déclenchement sécurisé de l'airbag.

5. Dispositif (100) selon l'une des revendications précédentes, **caractérisé en ce que** l'information délivrée par le moyen de surveillance (6) est délivrée à l'aide d'un témoin lumineux (12) qui s'allume si la position de pivotement déterminée n'est pas dans la plage de pivotement prédéterminée et qui s'éteint si la position de pivotement déterminée est située dans la plage de pivotement prédéterminée.

6. Dispositif (100) selon l'une des revendications précédentes, **caractérisé par** un moyen de réglage de volant (13) destiné au réglage motorisé de la position du volant entre la première position et la deuxième position et comprenant un moyen de commande (14) pour commander le réglage motorisé de la position du volant.

7. Dispositif (100) selon la revendication 6, **caractérisé en ce que** le moyen de surveillance (6) est conçu pour délivrer à un conducteur (9) lors du réglage manuel de la position du volant l'information selon laquelle la position de pivotement du volant (1) est dans la plage de pivotement prédéterminée ou non.

8. Dispositif (100) selon l'une des revendications précédentes, **caractérisé par** un moyen de détection de conducteur (4) qui est conçu pour déterminer la stature d'un conducteur et/ou la position du siège de conducteur.

9. Dispositif (100) selon la revendication 8, **caractérisé en ce que** la plage de pivotement prédéterminée est déterminée en fonction de la stature déterminée du conducteur et/ou de la position du siège de conducteur.

10. Dispositif (100) selon la revendication 8 ou 9 et la revendication 6, **caractérisé en ce que** la position du volant est réglée automatiquement sur une position de pivotement dans la plage de pivotement prédéterminée à l'aide du moyen de réglage de volant (13) et en fonction de la stature déterminée du conducteur et/ou de la position du siège de conducteur.

11. Dispositif (100) selon la revendication 10, **caractérisé en ce que** le dispositif (100) est conçu pour n'effectuer le réglage automatique de la position du volant qu'en présence d'une situation de fonctionnement prédéterminée, la situation de fonctionnement prédéterminée comprenant le mode de conduite, un engagement du mode de conduite et/ou un dépassement d'une vitesse de conduite minimale du véhicule automobile.

12. Dispositif (100) selon l'une des revendications précédentes, **caractérisé en ce que** le volant (1) peut pivoter en continu entre la première position et la deuxième position ou est réglable sur plusieurs positions intermédiaires discrètes.

13. Dispositif (100) selon l'une des revendications précédentes, **caractérisé en ce que** le moyen formant capteur (5) est conçu pour déterminer la position de pivotement du volant (1) dans toute la plage comprise entre la première et la deuxième position.

14. Véhicule automobile, de préférence véhicule utilitaire, comme par exemple un camion ou un bus, comprenant un dispositif (100) selon l'une des revendications précédentes.
